# EUROPEAN PATENT APPLICATION

(11) **EP 4 651 501 A1**
(43) Date of publication of application: **19.11.2025**
(21) Application number: 25175919.7
(22) Date of filing: 13.05.2025
(51) Int. Cl.: H04N 21/44, H04L 47/32, H04L 49/90

(54) **METHODS AND SYSTEMS FOR MANAGING A QUEUE IN HIGH-THROUGHPUT VIDEO SYSTEMS**

(30) Priority: 13.05.2024 US 202463646316 P; 08.05.2025 US 202519202969
(71) Applicant: Tyco Fire & Security GmbH, 8212 Neuhausen am Rheinfall (CH)
(72) Inventor: ROZNER, Amit, 8212 Neuhausen am Rheinfall (CH); CIACCO, Marco, 8212 Neuhausen am Rheinfall (CH); ARSLAN, A. Tugay, 8212 Neuhausen am Rheinfall (CH); FALIK, Yohay, 8212 Neuhausen am Rheinfall (CH)
(74) Representative: Meissner Bolte Nürnberg

(57) **Abstract**

Systems and methods are disclosed for receiving a video streaming packet from a video streaming source, removing, from the queue, a queued packet based on a size of the queue achieving a threshold and based on an index assigned to the queued packet being within a drop interval from an adjacent queued packet that is not dropped from the queue, and appending the video streaming packet to the queue.

## Description

### Claim of Priority under 35 U.S.C. §119

The present Application for Patent claims priority to Provisional Patent Application No. 63/646,316, entitled "METHODS AND SYSTEMS FOR MANAGING A QUEUE IN HIGH-THROUGHPUT VIDEO SYSTEMS" filed May 13, 2024, which is assigned to the assignee hereof and hereby expressly incorporated by reference herein for all purposes.

### TECHNICAL FIELD

The present disclosure relates to video processing, and more particularly to managing a queue of packets received from a video source for video processing. The invention relates in particular to a computer-implemented method for managing a queue of video streaming packets, to a respective apparatus and to one or more respective computer-readable media storing instructions.

### BACKGROUND

Video processing systems exist that receive video packets that originate from a video source, such as a camera, and can process the video packets for displaying an associated video, for analyzing a video to detect objects or behaviors using computer vision, etc. As video systems improve, the quality of the video can improve as well, which can cause video data to be of a larger size per unit of time. A video processing system can queue packets for processing based on hardware limitations of the video processing system, which may relate to processing limitations given the size of the video data, a number of real time video streams being processed by the video processing system, etc. In addition, a video processing system may be limited in storage space available for queuing the packets.

### SUMMARY

Embodiments of the invention are defined by independent claims 1, 6 and 11. Further embodiments of the invention are defined by the dependent claims.

This summary is provided to introduce a selection of concepts that are further described below in the DETAILED DESCRIPTION. This summary is not intended to identify key features of the claimed subject matter, nor is it intended to be used as an aid in determining the scope of the claimed subject matter.

In an aspect, a method for managing a queue of video streaming packets is provided that includes receiving a video streaming packet from a video streaming source, removing, from the queue, a queued packet based on a size of the queue achieving a threshold and based on an index assigned to the queued packet being within a drop interval from an adjacent queued packet that is not dropped from the queue, and appending the video streaming packet to the queue.

In another aspect, an apparatus including one or more memories configured to store a queue of video streaming packets and instructions for managing the queue, and one or more processors communicatively coupled with the one or more memories is provided. The one or more processors are configured to receive a second video streaming packet from the video streaming source, remove, from the queue, a second queued packet based on the size of the queue achieving a threshold and based on a second index assigned to the second queued packet being within the increased drop interval from a second adjacent queued packet that is not dropped from the queue, and append the second video streaming packet to the queue.

In another aspect, one or more computer-readable media storing instructions, executable by one or more processors, for managing a queue of video streaming packets are provided. The instructions includes instructions for receiving a video streaming packet from a video streaming source, removing, from the queue, a queued packet based on a size of the queue achieving a threshold and based on an index assigned to the queued packet being within a drop interval from an adjacent queued packet that is not dropped from the queue, and appending the video streaming packet to the queue.

In another aspect, a video processing device is provided that includes various hardware, software, or other components for managing a queue of video packets using one or more methods described herein. In another aspects, a video processing device is provided that includes means for managing a queue of video packets using one or more methods described herein. In another aspect, a computer-readable medium is provided herein that stores computer executable instructions for managing a queue of video packets using one or more methods described herein.

Further aspects of the present disclosure are described below.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a schematic diagram of an example of an video processing device and/or related components for processing video and/or managing a queue of video packets received from a video source for processing, according to implementations of the present disclosure;
FIG. 2 is a flowchart of an example of a method for removing queued video packets from a queue for appending newly received video packets to the queue, according to implementations of the present disclosure;
FIG. 3 illustrates examples of states of a queue that stores video packets when a drop interval is one or two, according to implementations of the present disclosure;
FIG. 4 illustrates examples of states of a queue that stores video packets when a drop interval is two or four, according to implementations of the present disclosure;
FIG. 5 is a flowchart of an example of a method for removing queued video packets from a queue for appending newly received video packets to the queue, according to implementations of the present disclosure; and
FIG. 6 is a block diagram of examples components of a computer device that may implement one or more of the features of the occupancy sensing device of FIG. 1.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Current video processing systems may be used to process multiple real time video streams, which may require queuing of video packets in a queue where the processing resources are not sufficient to handle the video packets. In addition, the video processing systems may be limited in the amount of memory available to the queue to use in storing video packets. As such, when the queue reaches a threshold size (e.g., its maximum size) and newer video packets are received from the video source, the video processing system may expire some packets in the queue to make room for the newer video packets.

The present disclosure addresses one or more shortcomings of video processing systems by selecting which packets in the queue are expired to allow for appending newer video packets, received from the video source, in the queue. The selection may adapt based on which packets are retained in the queue. In an example, the video processing system can index each packet received from the video source with an incremented value, and can expire packets from the queue based on a drop interval between the index value of certain packets, which can ensure that packets are expired in such a way to retain a substantially even spacing between the indices of packets in the queue. In some examples, this may provide less disruption to the video as compared to expiring multiple adjacent packets. For example, expiring packets having interlaced indices may have less impact on video motion, jitter, etc., than expiring a block of sequential packets (e.g., expiring packets having indices 2, 4, 6, 8 may have less impact than expiring a continuous block of packets, such as packets having indices 1, 2, 3, 4).

Accordingly, a drop interval is defined and set to a low value (e.g., 1), and the drop interval can be increased when the queue is full and no packets in the queue fall within the drop interval (e.g., when all packets in the queue have an index that is a multiple of the drop interval - index modulo the drop interval = 0). When the drop interval is increased, packets can be dropped from the queue starting with a lowest number packet that is within the drop interval (e.g., the packet having an index modulo the drop interval that does not = 0) to make room for newer packets. This can ensure that, as additional packets come into the queue, the packets are mostly separated in index by the drop interval, which can ensure consistent (temporal) spacing between dropped packets. As packets are processed from the queue, if the available space in the queue increases, the drop interval can be decreased such that more packets are kept in the queue, which can improve video performance.

Ensuring consistent spacing between the indices of the video packets in the queue in this regard can result in smoother and/or less jittery video for the purposes of video playback and/or analysis. For example, the smoother video playback can be more pleasing to view by a user. In another example, smoother video for video analysis can improve video analysis by easing object tracking in the smoother video. For example, at least in object detection technologies, jittery video or video having larger jumps in time between packets being processed can result in tracking errors as an object in the video may more drastically move positions as a larger number intermediate frames that show the object motion may be dropped. Moreover, allowing the drop interval to increase can provide adaptation for spikes in analytic load by expiring packets while maintaining a more smooth representation of the video based on selecting intervals of packets to be expired.

Turning now to the figures, example aspects are depicted with reference to one or more modules or components described herein, where modules or components in dashed lines may be optional.

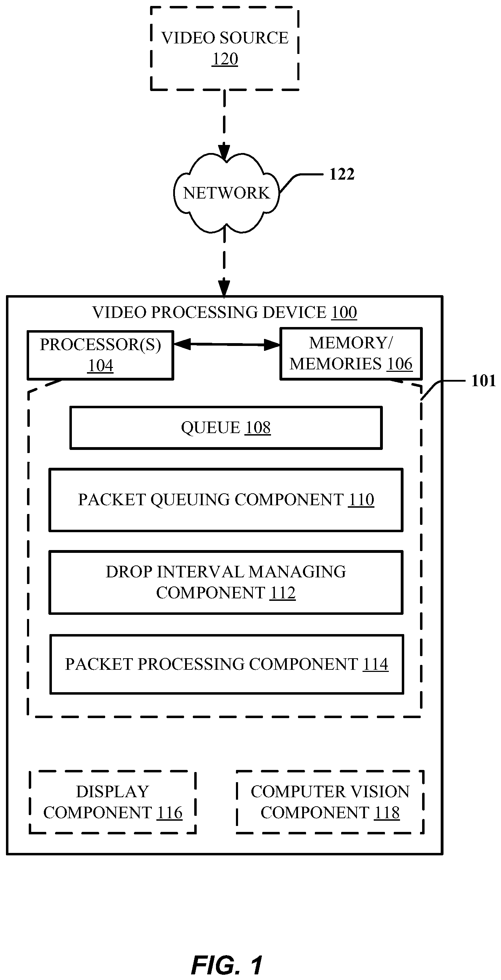

FIG. 1 is a schematic diagram of an example of a video processing device 100 and/or related components for processing video and/or managing a queue of video packets received from a video source for processing, in accordance with aspects described herein. In an example, video processing device 100 can receive multiple video packets (e.g., of a video stream) from a video source 120, which may be received via one or more nodes of a network 122. In addition, video processing device 100 can process the video packets for playback or display via a display component 116, for providing the video to a computer vision component 118 for performing object tracking or other analysis of the video using computer vision, etc. In an example, the processing of the video may not occur as fast as the video is received from video source 120, and thus video processing device 100 may include a queue 108 for queuing packets until the packets can be processed by the video processing device 100, the display component 116, the computer vision component 118, and/or the like. In an example, the display component 116 can communicate with a display device (not shown) to render the processed video packets as a video stream. In an example, computer vision component 118 can perform analysis of the video, such as object detection, using artificial intelligence (AI) modeling or other techniques to track objects or behaviors in the video based on comparing the video or images or other portions thereof to videos or images in a trained neural network.

In an example, video processing device 100 can include or can otherwise be coupled with one or more processors 104 and/or a memory or memories 106, where the processor(s) 104 and/or memory/memories 106 can be configured to execute or store instructions or other parameters related to managing a queue of video packets, as described herein. For example, processor(s) 104 and memory/memories 106 may be separate components communicatively coupled by a bus (e.g., on a motherboard or other portion of a computing device, on an integrated circuit, such as a system on a chip (SoC), etc.), components integrated within one another (e.g., processor(s) 104 can include the memory/memories 106 as an on-board component 101), and/or the like. In another example, processor(s) 104 can include multiple processors on different distributed computing resources (e.g., in cloud-based computing architecture). In an example, memory/memories 106 can include multiple memories on different distributed computing resources (e.g., in cloud-based computing architecture). Memory/memories 106 may store instructions, parameters, data structures, etc., for use/execution by processor(s) 104 to perform functions described herein.

In an example, video processing device 100 can optionally include one or more of a queue 108 for storing video packets received from a video source 120 for processing when resources are available at the video processing device 100, a packet queuing component 110 for managing the queue 108 of video packets in accordance with aspects described herein (which can include ensuring a substantially consistent interval across indices of the packets stored in the queue 108), a drop interval managing component 112 for setting a drop interval value to be used in managing the queue 108, and/or a packet processing component 114 for processing and/or removing packets from the queue 108 as part of video playback via display component 116, analysis via a computer vision component 118, etc.

As described for example, due to the presence of multiple video streams being received from one or more video sources, due to complexity of processing the multiple video streams (e.g., using complex neural networks), etc., the video processing device 100 may not have sufficient processing resources to process the videos at the same or faster speed than the video packets are received from the video source 120. As such, for example, video processing device 100 can store the video packets in queue 108 to await processing. In addition, for example, video processing device 100 may begin executing other processes (e.g., for video processing or otherwise) that may use resources and increase processing load on the video processing device 100, which may decrease resources available for processing the video packets, and may cause queuing of the video packets in queue 108. For these and/or other reasons, the number of packets being queued in queue 108 may achieve a threshold number, such as a maximum number of packets that can be queued (e.g., a size of memory or memories 106 available to the queue 108), which may require expiring some packets from the queue 108 to free up space for storing newer video packets from video source 120.

In accordance with examples described herein, packet queuing component 110 can assign an index to the video packets in an order the packets are received from the video source 120, which can include increasing the index for each new packet received. When the queue 108 is at a threshold capacity (e.g., the number or total size of packets in the queue 108 achieves a threshold), packet queuing component 110 can manage the queue 108 to make space for storing newly received video packets from the video source 120. For example, packet queuing component 110 can expire packets from the queue 108 utilizing a pattern that maintains a substantially consistent interval between indices of packets in the queue 108, which can provide a more manageable degradation in video quality than where large sequential chunks of packets are expired.

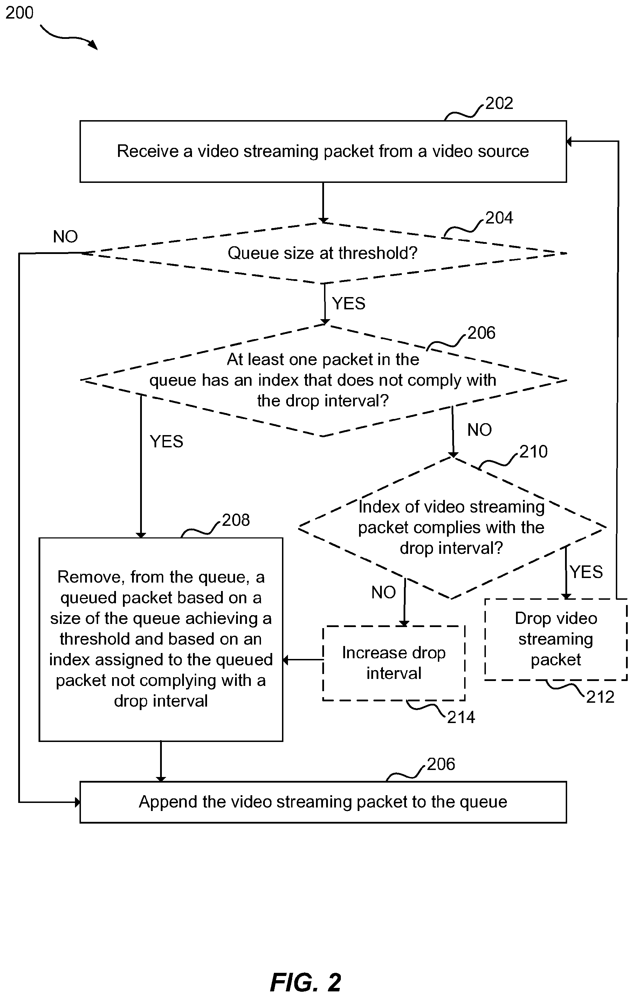

Referring to FIG. 2, an example of a method 200 for removing queued video packets from a queue for appending newly received video packets to the queue is depicted. The operations of the method 200 may be performed by one or more modules or components of the video processing device 100, as described herein.

At 202, the method 200 may include receiving a video streaming packet from a video source. In an example, packet queuing component 110, e.g., in conjunction with the one or more processors 104, memory/memories 106, etc., can receive the video streaming packet from the video source. For example, packet queuing component 110 can receive video stream packets, including the video streaming packet, at a speed that is based on a quality (e.g., frame rate) of the video being received, a network performance capability, etc. As described, in some examples, the video processing device 100 may not be able to immediately process the video packet, and packet queuing component 110 can attempt to store the packet in the queue 108 for later processing. In some cases, the size of the queue 108 can continue to grow, and it may not be possible for the packet processing component 114 to process the video stream packets in the queue before additional video stream packets are received.

In some examples, as described further herein, at 204, the method 200 may optionally include determining whether the queue size is at a threshold (e.g., a maximum size for the queue). In an example, packet queuing component 110, e.g., in conjunction with the one or more processors 104, memory/memories 106, etc., can determine whether the queue size of the queue 108 is at a threshold. If not, at 206, the method 200 may include appending the video streaming packet to the queue. In an example, packet queuing component 110, e.g., in conjunction with the one or more processors 104, memory/memories 106, etc., can append the video streaming packet to the queue (e.g., to the end of the queue) and/or may assign an incremented index to the packet.

If the queue size is at the threshold at 204, at 206, packets can be dropped from the queue, and the method 200 may optionally include determining whether at least one packet in the queue has an index that does not comply with the drop interval. In an example, packet queuing component 110, e.g., in conjunction with the one or more processors 104, memory/memories 106, etc., can determine whether at least one packet in the queue has an index that does not comply with the drop interval. For example, packet queuing component 110 can determine whether any packet in the queue has an index where the value of the index modulo the drop interval is not equal to zero. If so, this packet can be removed from the queue 108 to make space for appending the received video streaming packet. Said differently, for example, packet queuing component 110 can determine whether a packet in the queue has an index that is within the drop interval from an associated adjacent queued packet, can drop such packet(s) from the queue 108.

Thus, for example, at 208, the method 200 can include removing, from the queue, a queued packet based on a size of the queue achieving a threshold and based on an index assigned to the queued packet not complying with a drop interval. In an example, packet queuing component 110, e.g., in conjunction with the one or more processors 104, memory/memories 106, etc., can remove, from the queue 108, a queued packet based on the size of the queue achieving the threshold (e.g., as determined at 204 or otherwise) and based on the index assigned to the queued packet not complying with a drop interval. For example, packet queuing component 110 can remove an oldest packet (e.g., a packet having a lowest index) that does not comply with the drop interval (e.g., the index of the packet modulo the drop interval does not equal 0). Said differently, in some examples, packet queuing component 110 can remove a queued packet having an index that is within the drop interval from an adjacent queued packet that is not dropped from the queue 108. As described, drop interval managing component 112 can initially set the drop interval to one, or to another value, which may depend on one or more performance metrics of the video processing device 100, a speed (e.g., frame rate) at which video packets are being received from the video source 120, a complexity of the video processing being performed (e.g., playback or computer vision techniques may use different drop intervals), etc. The drop interval can ensure there is a substantially consistent spacing between indices of packets in the queue 108, as described further herein. In addition, the drop interval can be adapted as available processing resources at the video processing device 100 decrease or the queue 108 otherwise continues to achieve the threshold size.

If there is not at least one packet in the queue that has an index within the drop interval from an associated adjacent queued packet at 206, at 210, the method 200 can optionally include determining whether an index of the video streaming packet complies with the drop interval. In an example, packet queuing component 110, e.g., in conjunction with the one or more processors 104, memory/memories 106, etc., can determine whether the index of the video streaming packet received from video source 120, and to be appended to the queue, complies with the drop interval. In one example, packet queuing component 110 can determine whether the value of the index of the video streaming packet modulo the drop interval equals 0, or can determine whether the index of the video streaming packet is within the drop interval from a last queued packet that was the last packet appended to the queue 108. If not, at 212, the method 200 can optionally include dropping the video streaming packet. In an example, packet queuing component 110, e.g., in conjunction with the one or more processors 104, memory/memories 106, etc., can drop this video streaming packet as it does not comply with the drop interval. In this case, the method 200 can proceed to 202 to receive a next video streaming packet from the video source.

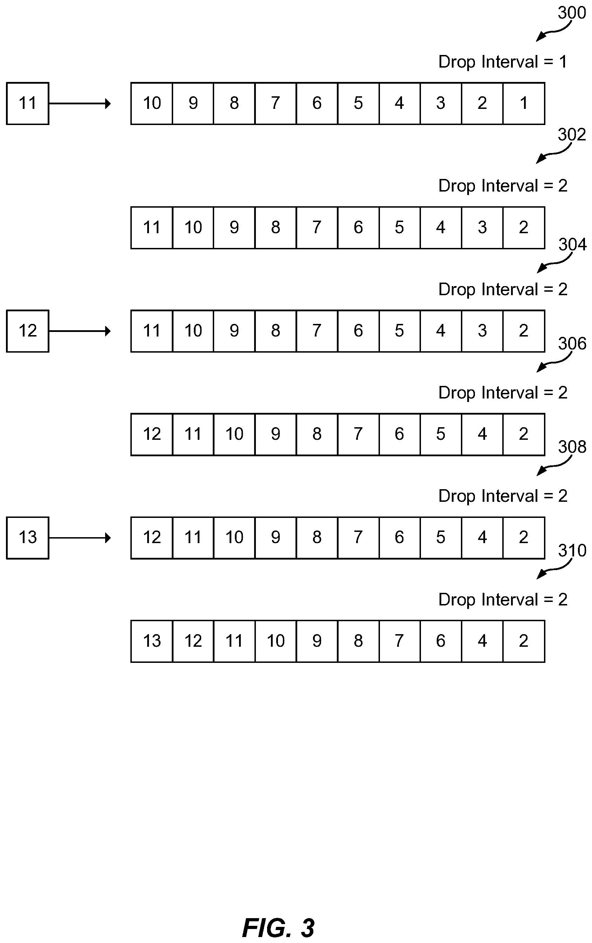

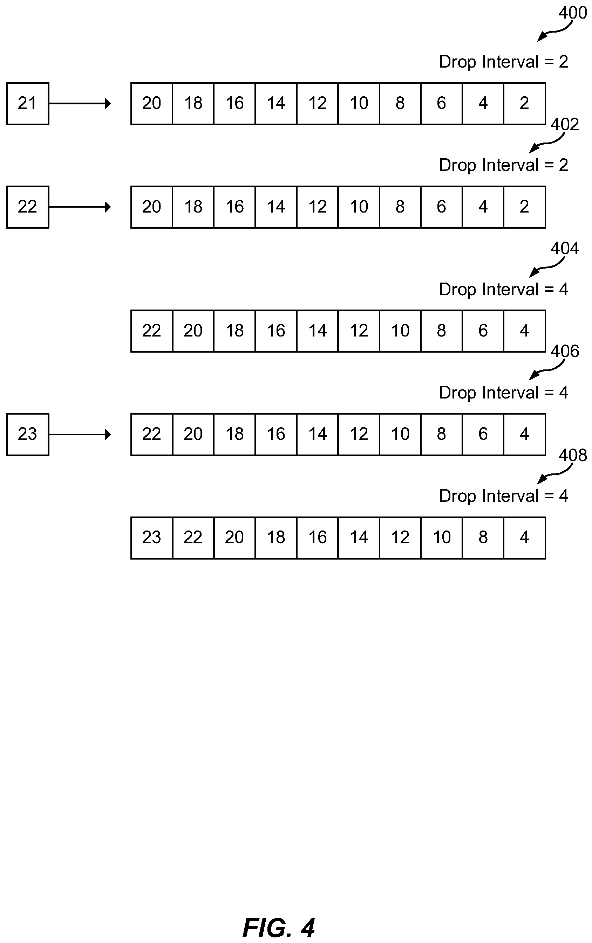

If the index of the video streaming packet is within the drop interval from a last queued packet at 210, at 214, method 200 can optionally include increasing the drop interval. In an example, drop interval managing component 112, e.g., in conjunction with the one or more processors 104, memory/memories 106, etc., can increase the drop interval in this case, which may include incrementing the drop interval, doubling the drop interval, etc. In an example, drop interval managing component 112 can increase the drop interval to a certain value based on one or more performance parameters of the video processing device 100, a speed (e.g., frame rate) at which the video packets are received from the video source 120, a duration of time during which the queue 108 achieved the threshold size, etc. In one specific example, drop interval managing component 112 can increase the drop interval to be a next exponent of two (e.g., drop interval can be initially set to 2⁰ = 1, then increased to 2¹ = 2 if needed, then increased to 2² = 4, if needed, then increased to 2³ = 8 if needed, etc.). With the drop interval increased, the method 200 can proceed to 208 where a queued packet having an index does not comply the new drop interval. An example of dropping packets from the queue 108 to append newly received video streaming packets is illustrated in FIGs. 3 and 4.

FIG. 3 illustrates examples of states of a queue that stores video packets when a drop interval is one or two, in accordance with aspects described herein. In this specific non-limiting example, the queue can have a maximum capacity of 10 packets, as one example to ease explanation. In state 300, the queue can include packets with indices from 1 to 10 with the drop interval equal to one, and packet with index 11 is received from the video source. When the drop interval is one, and the queue is full, each packet may be a candidate for removal. In an example, packet queuing component 110 can drop the oldest packet from the queue, e.g., packet 1, to make space for appending packet 11. In another example, as shown in state 302, drop interval managing component 112 can increase the drop interval (e.g., double the drop interval) to two, and then packet queuing component 110 can drop the oldest packet that does not comply with the drop interval, which can be packet 1, as 1 modulo 2 does not equal zero. Packet queuing component 110 can append packet 11 to the queue. In state 304, packet 12 can be received from the video source for appending to the queue where the drop interval is equal to two. Packet queuing component 110 can drop the oldest packet that does not comply with the drop interval, which can be packet 3, as 3 modulo 2 does not equal zero, and can append packet 12 to the queue, as shown in state 306. In state 308, packet 13 can be received from the video source for appending to the queue where the drop interval is equal to two. Packet queuing component 110 can drop the oldest packet that does not comply with the drop interval, which can be packet 5, as 5 modulo 2 does not equal zero, and can append packet 13 to the queue, as shown in state 310. As packets are dropped from the queue, at least the earliest stored packets can become separated by indices of two, which can provide a smart packet dropping strategy by spacing out the dropped packets to provide a smoother interruption to the video caused by dropping packets.

FIG. 4 illustrates examples of states of a queue that stores video packets when a drop interval is two or four, according to implementations of the present disclosure. In state 400, the queue can include packets with even indices from 2 to 20, e.g., indices that comply with the drop interval equal to two, and packet with index 21 is received from the video source. In this example, as the queue includes all packets that comply with the drop interval of two, packet queuing component 110 can drop packet 21 as it would be the oldest packet, if stored, that does not comply with the drop interval. In state 402, the packet with index 22 can be received from the video source, which does comply with the drop interval of two. In this example, drop interval managing component 112 can increase the drop interval (e.g., double the drop interval) to four to make space for packet 22, and then packet queuing component 110 can drop the oldest packet that does not comply with the drop interval, which can be packet 2, as 2 modulo 4 does not equal zero. Packet queuing component 110 can append packet 22 to the queue, as shown in state 404. In state 406, packet 23 can be received from the video source for appending to the queue where the drop interval is equal to four. Packet queuing component 110 can drop the oldest packet that does not comply with the drop interval, which can be packet 6, as 6 modulo 4 does not equal zero, and can append packet 23 to the queue, as shown in state 408. As packets are dropped from the queue, at least the earliest stored packets can become separated by indices of four, and so on.

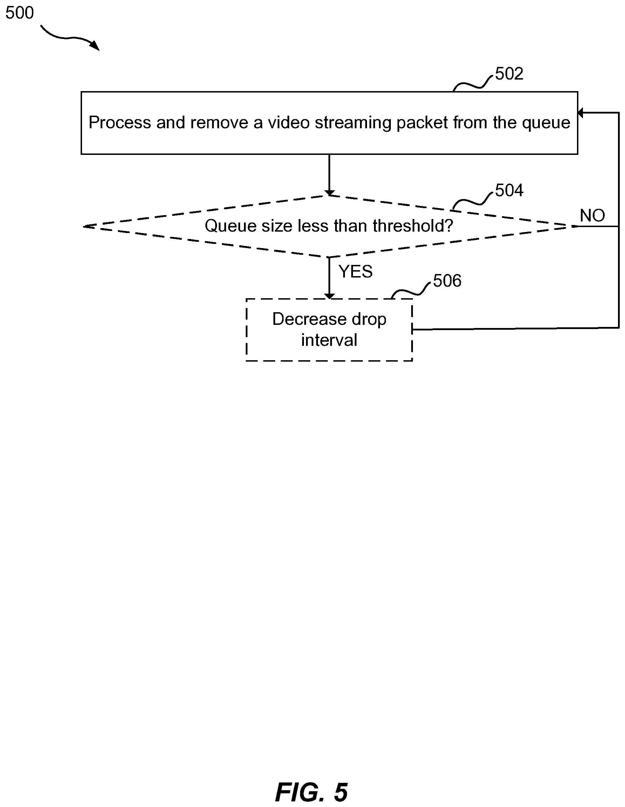

Referring to FIG. 5, an example of a method 500 for processing queued video packets from a queue is depicted. The operations of the method 500 may be performed by one or more modules or components of the video processing device 100, as described herein.

At 502, the method 500 may include processing and removing a video streaming packet from the queue. In an example, packet processing component 114, e.g., in conjunction with the one or more processors 104, memory/memories 106, etc., can process and remove the video streaming packet from the queue. For example, packet processing component 114 can process and remove the video streaming packet from the queue 108, which can include processing and removing the oldest packet from the queue. In an example, as described, packet processing component 114 can process the video packet at least in part by providing associated video rendering instructions to or by display component 116, analyzing a frame of the video via computer vision component 118, and/or the like.

At 504, the method 500 can optionally include determining whether the queue size is less than a threshold. In an example, drop interval managing component 112, e.g., in conjunction with the one or more processors 104, memory/memories 106, etc., can determine whether the queue size, after removing one or more packets, is less than a threshold. If so, at 506, the method 500 can optionally include decreasing the drop interval. In an example, drop interval managing component 112, e.g., in conjunction with the one or more processors 104, memory/memories 106, etc., can decrease the drop interval when the queue size, e.g., the utilized size of the queue, the number of packets stored in the queue, etc., is less than the threshold. For example, as packets are processed from the queue, and the number of packets in the queue can decrease before additional packets are received from the video source, drop interval managing component 112 can decrease the drop interval. In one example, drop interval managing component 112 can decrease the drop interval back to one, e.g., such that no packets are dropped until the queue reaches a maximum threshold. In other examples, drop interval managing component 112 can more gradually decrease the drop interval, for more efficient management of the queue, for example by halving the drop interval when the queue size goes less than a first threshold, again halving the drop interval when the queue size goes less than a second threshold (or remains less than the first threshold for a certain period of time or number of packets processed), etc.

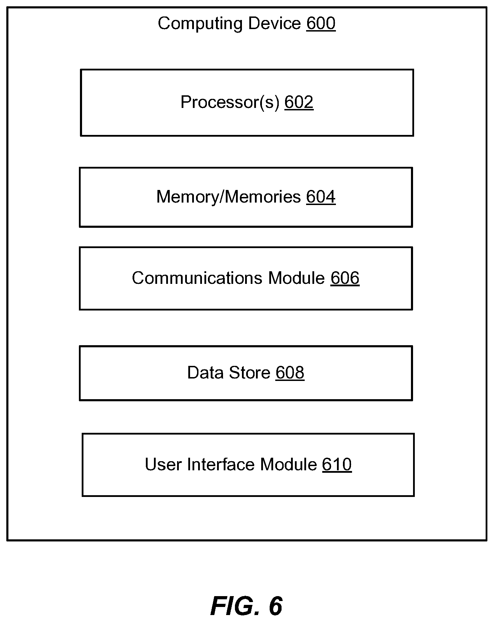

Referring to FIG. 6, a computing device 600 may implement all or a portion of the functionality described in FIGS. 1-6. For example, the computing device 600 may be or may include at least a portion of the video processing device 100, or any other module or component described herein with reference to FIGS. 1-6. The computing device 600 may include one or more processors 602 which may be configured to execute or implement software, hardware, and/or firmware modules that perform some or all of the functionality described herein with reference to FIGS. 1-5. For example, the processor(s) 602 may be configured to execute or implement software, hardware, and/or firmware modules that perform some or all of the functionality described herein with reference to the video processing device 100, or any other module or component described herein with reference to FIGS. 1-6.

The processor(s) 602 may be a micro-controller, an application-specific integrated circuit (ASIC), or a field-programmable gate array (FPGA), and/or may include a single or multiple set of processors or multi-core processors. Moreover, the processor(s) 602 may be implemented as an integrated processing system and/or a distributed processing system. The computing device 600 may further include memory/memories 604, such as for storing local versions of applications being executed by the processor(s) 602, related instructions, parameters, etc. The memory/memories 604 may include a type of memory usable by a computer, such as random access memory (RAM), read only memory (ROM), tapes, magnetic discs, optical discs, volatile memory, non-volatile memory, and any combination thereof. Additionally, the processor(s) 602 and the memory/memories 604 may include and execute an operating system executing on the processor(s) 602, one or more applications, display drivers, etc., and/or other modules or components of the computing device 600.

Further, the computing device 600 may include a communications module 606 that provides for establishing and maintaining communications with one or more other devices, parties, entities, etc. utilizing hardware, software, and services. The communications module 606 may carry communications between modules on the computing device 600, as well as between the computing device 600 and external devices, such as devices located across a communications network and/or devices serially or locally connected to the computing device 600. In an aspect, for example, the communications module 606 may include one or more buses, and may further include transmit chain modules and receive chain modules associated with a wireless or wired transmitter and receiver, respectively, operable for interfacing with external devices.

Additionally, the computing device 600 may include a data store 608, which can be any suitable combination of hardware and/or software, that provides for mass storage of information, databases, and programs. For example, the data store 608 may be or may include a data repository for applications and/or related parameters not currently being executed by processor(s) 602. In addition, the data store 608 may be a data repository for an operating system, application, display driver, etc., executing on the processor 602, and/or one or more other modules of the computing device 600.

The computing device 600 may also include a user interface module 610 operable to receive inputs from a user of the computing device 600 and further operable to generate outputs for presentation to the user (e.g., via a display interface to a display device). The user interface module 610 may include one or more input devices, including but not limited to a keyboard, a number pad, a mouse, a touch-sensitive display, a navigation key, a function key, a microphone, a voice recognition module, or any other mechanism capable of receiving an input from a user, or any combination thereof. Further, the user interface module 610 may include one or more output devices, including but not limited to a display interface, a speaker, a haptic feedback mechanism, a printer, any other mechanism capable of presenting an output to a user, or any combination thereof.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims.

Embodiment 1. A computer-implemented method for managing a queue of video streaming packets including receiving a video streaming packet from a video streaming source, removing, from the queue, a queued packet based on a size of the queue achieving a threshold and based on an index assigned to the queued packet being within a drop interval from an adjacent queued packet that is not dropped from the queue, and appending the video streaming packet to the queue.

Embodiment 2. The computer-implemented method of Embodiment 1, wherein the computer-implemented method comprises increasing the drop interval to an increased drop interval based on no packets in the queue being within the drop interval from an associated adjacent queued packet in the queue.

Embodiment 3. The computer-implemented method of Embodiment 1 or 2, wherein the computer-implemented method comprises receiving a second video streaming packet from the video streaming source, removing, from the queue, a second queued packet based on the size of the queue achieving a threshold and based on a second index assigned to the second queued packet being within the increased drop interval from a second adjacent queued packet that is not dropped from the queue, and appending the second video streaming packet to the queue.

Embodiment 4. The computer-implemented method of any of Embodiments 1 to 3, wherein the drop interval is an exponent of two, and wherein the increased drop interval is a next exponent of two.

Embodiment 5. The computer-implemented method of any of Embodiments 1 to 4, wherein the computer-implemented method comprises determining whether the queued packet is within the drop interval based at least in part on whether the index modulo the drop interval is greater than zero.

Embodiment 6. The computer-implemented method of any of Embodiments 1 to 5, wherein the computer-implemented method comprises decreasing the drop interval based at least in part on detecting the size of the queue being less than a second threshold.

Embodiment 7. The computer-implemented method of any of Embodiments 1 to 6, wherein the computer-implemented method comprises removing a first queued packet from the queue for processing.

Embodiment 8. An apparatus comprising one or more memories configured to store a queue of video streaming packets and instructions for managing the queue, and one or more processors communicatively coupled with the one or more memories. The one or more processors are configured to receive a video streaming packet from a video streaming source, remove, from the queue, a queued packet based on a size of the queue achieving a threshold and based on an index assigned to the queued packet being within a drop interval from an adjacent queued packet that is not dropped from the queue, and append the video streaming packet to the queue.

Embodiment 9. The apparatus of Embodiment 8, wherein the one or more processors are configured to increase the drop interval to an increased drop interval based on no packets in the queue being within the drop interval from an associated adjacent queued packet in the queue.

Embodiment 10. The apparatus of Embodiment 8 or 9, wherein the one or more processors are configured to receive a second video streaming packet from the video streaming source, remove, from the queue, a second queued packet based on the size of the queue achieving a threshold and based on a second index assigned to the second queued packet being within the increased drop interval from a second adjacent queued packet that is not dropped from the queue, and append the second video streaming packet to the queue.

Embodiment 11. The apparatus of any of Embodiments 8 to 10, wherein the drop interval is an exponent of two, and wherein the increased drop interval is a next exponent of two.

Embodiment 12. The apparatus of any of Embodiments 8 to 11, wherein the one or more processors are configured to determine whether the queued packet is within the drop interval based at least in part on whether the index modulo the drop interval is greater than zero.

Embodiment 13. The apparatus of any of Embodiments 8 to 12, wherein the one or more processors are configured to decrease the drop interval based at least in part on detecting the size of the queue being less than a second threshold.

Embodiment 14. The apparatus of any of Embodiments 8 to 13, wherein the one or more processors are configured to remove a first queued packet from the queue for processing.

Embodiment 15. One or more computer-readable media storing instructions, executable by one or more processors, for managing a queue of video streaming packets. The instructions include instructions for receiving a video streaming packet from a video streaming source, removing, from the queue, a queued packet based on a size of the queue achieving a threshold and based on an index assigned to the queued packet being within a drop interval from an adjacent queued packet that is not dropped from the queue, and appending the video streaming packet to the queue.

Embodiment 16. The one or more computer-readable media of Embodiment 15, wherein the instructions comprise instructions for increasing the drop interval to an increased drop interval based on no packets in the queue being within the drop interval from an associated adjacent queued packet in the queue.

Embodiment 17. The one or more computer-readable media of Embodiment 15 or 16, wherein the instructions comprise instructions for receiving a second video streaming packet from the video streaming source, removing, from the queue, a second queued packet based on the size of the queue achieving a threshold and based on a second index assigned to the second queued packet being within the increased drop interval from a second adjacent queued packet that is not dropped from the queue, and appending the second video streaming packet to the queue.

Embodiment 18. The one or more computer-readable media of any of Embodiments 15 to 17, wherein the drop interval is an exponent of two, and wherein the increased drop interval is a next exponent of two.

Embodiment 19. The one or more computer-readable media of any of Embodiments 15 to 18, wherein the instructions comprise instructions for determining whether the queued packet is within the drop interval based at least in part on whether the index modulo the drop interval is greater than zero.

Embodiment 20. The one or more computer-readable media of any of Embodiments 15 to 19, wherein the instructions comprise instructions for decreasing the drop interval based at least in part on detecting the size of the queue being less than a second threshold.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

## Claims

1. A computer-implemented method for managing a queue of video streaming packets, comprising:
receiving a video streaming packet from a video streaming source;
removing, from the queue, a queued packet based on a size of the queue achieving a threshold and based on an index assigned to the queued packet being within a drop interval from an adjacent queued packet that is not dropped from the queue; and
appending the video streaming packet to the queue.

2. The computer-implemented method of claim 1, further comprising increasing the drop interval to an increased drop interval based on no packets in the queue being within the drop interval from an associated adjacent queued packet in the queue.

3. The computer-implemented method of claim 2, further comprising:
receiving a second video streaming packet from the video streaming source;
removing, from the queue, a second queued packet based on the size of the queue achieving a threshold and based on a second index assigned to the second queued packet being within the increased drop interval from a second adjacent queued packet that is not dropped from the queue; and
appending the second video streaming packet to the queue, optionally wherein the drop interval is an exponent of two, and wherein the increased drop interval is a next exponent of two.

4. The computer-implemented method of any of the preceding claims, further comprising determining whether the queued packet is within the drop interval based at least in part on whether the index modulo the drop interval is greater than zero, and/or further comprising decreasing the drop interval based at least in part on detecting the size of the queue being less than a second threshold.

5. The computer-implemented method of any of the preceding claims, further comprising removing a first queued packet from the queue for processing.

6. An apparatus, comprising:
one or more memories configured to store a queue of video streaming packets and instructions for managing the queue; and
one or more processors communicatively coupled with the one or more memories, wherein the one or more processors are configured to:
receive a video streaming packet from a video streaming source;
remove, from the queue, a queued packet based on a size of the queue achieving a threshold and based on an index assigned to the queued packet being within a drop interval from an adjacent queued packet that is not dropped from the queue; and
append the video streaming packet to the queue.

7. The apparatus of claim 6, wherein the one or more processors are configured to increase the drop interval to an increased drop interval based on no packets in the queue being within the drop interval from an associated adjacent queued packet in the queue.

8. The apparatus of claim 7, wherein the one or more processors are configured to:
receive a second video streaming packet from the video streaming source;
remove, from the queue, a second queued packet based on the size of the queue achieving a threshold and based on a second index assigned to the second queued packet being within the increased drop interval from a second adjacent queued packet that is not dropped from the queue; and
append the second video streaming packet to the queue, optionally wherein the drop interval is an exponent of two, and wherein the increased drop interval is a next exponent of two.

9. The apparatus of any of claims 6 to 8, wherein the one or more processors are configured to determine whether the queued packet is within the drop interval based at least in part on whether the index modulo the drop interval is greater than zero, and/or wherein the one or more processors are configured to decrease the drop interval based at least in part on detecting the size of the queue being less than a second threshold.

10. The apparatus of any of claims 6 to 9, wherein the one or more processors are configured to remove a first queued packet from the queue for processing.

11. One or more computer-readable media storing instructions, executable by one or more processors, for managing a queue of video streaming packets, the instructions comprising instructions for:
receiving a video streaming packet from a video streaming source;
removing, from the queue, a queued packet based on a size of the queue achieving a threshold and based on an index assigned to the queued packet being within a drop interval from an adjacent queued packet that is not dropped from the queue; and
appending the video streaming packet to the queue.

12. The one or more computer-readable media of claim 11, the instructions comprising instructions for increasing the drop interval to an increased drop interval based on no packets in the queue being within the drop interval from an associated adjacent queued packet in the queue.

13. The one or more computer-readable media of claim 12, the instructions comprising instructions for:
receiving a second video streaming packet from the video streaming source;
removing, from the queue, a second queued packet based on the size of the queue achieving a threshold and based on a second index assigned to the second queued packet being within the increased drop interval from a second adjacent queued packet that is not dropped from the queue; and
appending the second video streaming packet to the queue, optionally wherein the drop interval is an exponent of two, and wherein the increased drop interval is a next exponent of two.

14. The one or more computer-readable media of any of claims 11 to 13, the instructions comprising instructions for determining whether the queued packet is within the drop interval based at least in part on whether the index modulo the drop interval is greater than zero.

15. The one or more computer-readable media of any of claims 11 to 14, the instructions comprising instructions for decreasing the drop interval based at least in part on detecting the size of the queue being less than a second threshold.
